# EUROPÄISCHE PATENTSCHRIFT

(11) **EP 1 858 349 B1**
(45) Veröffentlichungstag und Bekanntmachung des Hinweises auf die Patenterteilung: **26.05.2010**
(21) Anmeldenummer: 06723153.0
(22) Anmeldetag: 01.03.2006
(51) Int. Cl.: A23L 1/10

(54) **ISOMALT IN CEREALIEN-PRODUKTEN**
ISOMALT IN CEREAL PRODUCTS
ISOMALT DANS LES PRODUITS CEREALIERS

(30) Priorität: 07.03.2005 DE 102005010833
(43) Veröffentlichungstag der Anmeldung: 28.11.2007
(73) Patentinhaber: Südzucker Aktiengesellschaft Mannheim/Ochsenfurt, 68165 Mannheim (DE)
(72) Erfinder: FRITZSCHING, Bodo, 69514 Laudenbach (DE); KOWALCZYK, Jörg, 67304 Eisenberg/Steinborn (DE)
(74) Vertreter: Schwahn, Hartmut
(86) Internationale Anmeldenummer: PCT/EP2006/001855
(87) Internationale Veröffentlichungsnummer: WO 2006/094686

(56) Entgegenhaltungen:
- EP-B- 0 625 578
- WO-A-00/60954
- DE-A1- 4 001 069
- DE-A1- 10 131 782
- US-A1- 2004 013 771

## Beschreibung

Die vorliegende Erfindung betrifft Cerealien-Produkte in beschichteter und unbeschichteter Form, Verfahren zur Herstellung beschichteter und unbeschichteter Cerealien sowie die Verwendung eines 1,6-GPS (6-O-α-D-Glucopyranosyl-D-sorbit)- und 1,1-GPM (1-O-α-D-Glucopyranosyl-D-mannit)-haltigen Zuckeralkoholgemisches zur Herstellung von Cerealien-Produkten, wobei das 1,6-GPS- und 1,1-GPM-haltige Gemisch als Bindemittel und/oder als Bestandteil einer Beschichtungslösung oder eines Beschichtungssirups dient.

Cerealien, also Getreideprodukte insbesondere aus Mais, Weizen, Reis, Hafer, Gerste oder Roggen weisen üblicherweise Vitamine, Mineralstoffe sowie Ballaststoffe auf und haben sich als ernährungsphysiologisch wichtige Bestandteile der heutigen Ernährung durchgesetzt. Sie haben in der Regel einen günstigen Einfluss auf den Blutzuckerspiegel und die Cholesterinwerte und tragen damit zu einer Gesunderhaltung des Konsumenten bei.

So sind aus der EP 0 434 025 B1 Cerealien in Form von Crispies bekannt. Crispies sind Extrudate aus einem oder mehreren Mehlsorten oder auch aus gepufften Cerealienkörnern, die unter Zusatz von Zucker und weiteren geschmacksgebenden Komponenten hergestellt sind. Die genannte europäische Patentschrift stellt Rezepturen und Verfahren zur Herstellung von Crispies zur Verfügung, die verbesserte ernährungsphysiologische Eigenschaften aufweisen. Dies wird dadurch erreicht, dass saccharosefreie Crispies bereitgestellt werden, die als Zuckeraustauschstoff Polyole oder Zuckeralkohole wie Sorbit, Mannit, Xylit, Maltit, Lactit oder Isomalt aufweisen.

Die US 6,475,540 B1 offenbart Cerealien, in denen die üblicherweise vorhandene Saccharose teilweise oder vollständig ersetzt ist durch Tagatose oder Gemische von Tagatose mit Polyolen wie Sorbit, Maltit, Isomalt, Erythrit, Xylit, Lactit oder hydriertem Maissirup.

Die WO 00/60954 A offenbart ein Verfahren zur Herstellung eines glasierten Cerealien-Produktes mit einem Kern aus Cerealien (Puffmais) und einer Beschichtung, enthaltend 20 bis 80% eines Gemisches aus 1,6-GPS und 1,1-GPM; die Beschichtung wird bei einer Temperatur von 110 bis 170°C durchgeführt. Ob und inwieweit eine Trocknung durchgeführt wird, ist nicht offenbart.

Die US 2004/013771 A1 offenbart ein beschichtetes Cerealienprodukt mit einem Kern aus Cerealien, etwa 40% Bindemittel, wobei Isomalt als bevorzugtes Bindemittel beschrieben wird, und einer Beschichtung. Das Cerealienprodukt enthält weniger als 40% Cerealien.

Der vorliegenden Erfindung liegt das technische Problem zugrunde, Cerealien-Produkte bereitzustellen, die möglichst frei von Diabetikerungeeigneten üblichen Zuckern wie Saccharose oder Glucose, gleichzeitig aber einfach und kostengünstig herstellbare organoleptisch und gesundheitlich vorteilhafte Produkte sind. Darüber hinaus sollten die erfindungsgemäßen Cerealien-Produkte nicht von den Saccharose-basierten Cerealien-Produkten unterscheidbar und in erhöhtem Maße lagerfähig sein.

Die vorliegende Erfindung löst das ihr zugrundeliegende Problem durch die Bereitstellung eines Verfahrens zur Herstellung eines glasierten oder gefrosteten Cerealien-Produkts, umfassend a) durch mindestens ein Bindemittel verbundene Cerealien und/oder b) mindestens eine Beschichtung aufweisende Cerealien, wobei das Cerealien-Produkt 50 bis 95 Gew.-% (bezogen auf Gesamttrockensubstanz des Cerealien-Produktes), Cerealien und 5 bis 50 Gew.-% (bezogen auf Gesamttrockensubstanz des Cerealien-Produktes) eines 1,6-GPS- und 1,1-GPM-haltigen Gemisches enthält. Die 1,6-GPS-und 1,1-GPM-haltigen Cerealien-Produkte können daher eine 1,6-GPS- und 1,1-GPM-haltige Beschichtung und/oder ein 1,6-GPS- und 1,1-GPM-haltiges Bindemittel aufweisen.

Die Erfindung sieht daher ein Cerealien-Produkt vor, welches einerseits in wesentlichen Anteilen, das heißt zu 50 bis 95 Gew.-%, vorzugsweise mehr als 50 Gew.-% bis 95 Gew.-%, insbesondere 60 bis 95 Gew.-%, 70 bis 95 Gew.-%, 80 bis 95 Gew.-% oder besonders bevorzugt 90 Gew.-% bis 95 Gew.-% (bezogen auf Gesamttrockensubstanz des Cerealien-Produktes) Cerealien enthält und darüber hinaus in einer Menge von 5 bis 50 Gew.-% (bezogen auf Gesamttrockensubstanzgehalt des Cerealien-Produkts) ein 1,6-GPS- und 1,1-GPM-haltiges Gemisch aufweist.

Im Zusammenhang mit der vorliegenden Erfindung wird unter einem 1,6-GPS- und 1,1-GPM-haltigen Gemisch ein Gemisch der beiden Zuckeralkohole 1,6-GPS und 1,1-GPM verstanden, welches diese beiden Zuckeralkohole in beliebigem Verhältnis zueinander umfasst, im wesentlichen aus diesem besteht, beziehungsweise allein aus diesem besteht. In einer besonders bevorzugten Ausführungsform der vorliegenden Erfindung wird unter einem 1,6-GPS- und 1,1-GPM-haltigen Gemisch Isomalt verstanden, also ein nahezu äquimolares Gemisch aus 1,6-GPS und 1,1-GPM. In einer weiteren bevorzugten Ausführungsform wird unter einem 1,6-GPS und einem 1,1-GPM-haltigen Gemisch Isomalt GS, also ein Gemisch aus 75 bis 80 Gew.-% 1,6-GPS und 25 bis 20 Gew.-% 1,1-GPM verstanden. In einer weiteren bevorzugten Ausführungsform wird unter einem 1,6-GPS- und einem 1,1-GPM-haltigen Gemisch ein 1,6-GPS-angereichertes oder ein 1,1-GPM-angereichertes Gemisch verstanden, so wie sie in zum Beispiel in der DE 195 32 396 C2 beschrieben sind. Demgemäß ist ein 1,6-GPS-angereichertes Gemisch ein Gemisch umfassend mehr als 57 Gew.-% bis 99 Gew.-% 1,6-GPS und weniger als 43 Gew.-% bis 1 Gew.-% 1,1-GPM. Dementsprechend ist ein 1,1-GPM-angereichertes Gemisch ein Gemisch umfassend mehr als 57 Gew.-% bis 99 Gew.-% 1,1-GPM und weniger als 43 Gew.-% bis 1 Gew.-% 1,6-GPS. Unter einem 1,6-GPS und 1,1-GPM-haltigen Gemisch wird aber auch ein 1,6-GPS-, 1,1-GPM- und 1,1-GPS-haltiges Gemisch verstanden, so wie es beispielsweise in der EP 0 625 578 B2 beschrieben ist.

In einer besonders bevorzugten Ausführungsform sieht die Erfindung Cerealien-Produkte vor, welche aus einem Cerealienkern, insbesondere einem Kern, umfassend Cerealien und, optional, bevorzugt mindestens ein Bindemittel, und mindestens einer auf dem Kern aufgebrachten Beschichtung aufgebaut sind. In einer besonders bevorzugten Ausführungsform kann dabei vorgesehen sein, dass das 1,6-GPS- und 1,1-GPM-haltige Gemisch sowohl im Kern als auch in der Beschichtung vorhanden ist. In einer weiteren Ausführungsform kann vorgesehen sein, dass das 1,6-GPS- und 1,1-GPM-haltige Gemisch allein im Kern und nicht in der Beschichtung vorhanden ist. In einer weiteren bevorzugten Ausführungsform kann vorgesehen sein, dass das 1,6-GPS- und 1,1-GPM-haltige Gemisch allein in der Beschichtung und nicht im Kern vorhanden ist.

In einer weiteren bevorzugten Ausführungsform ist vorgesehen, dass das 1,6-GPS- und 1,1-GPM-haltige Gemisch der einzige zugesetzte Zuckeralkohol beziehungsweise Gemisch davon im Cerealien-Produkt ist. In einer weiteren bevorzugten Ausführungsform ist vorgesehen, dass das 1,6-GPS- und 1,1-GPM-haltige Gemisch das einzig zugesetzte körpergebende süßende Agens im Cerealien-Produkt ist. In einer weiteren bevorzugten Ausführungsform ist vorgesehen, dass das 1,6-GPS- und 1,1-GPM-haltige Gemisch das einzige zugesetzte süßende Agens im Cerealien-Produkt ist. Die Erfindung stellt in besondert bevorzugter Ausführungsform Cerealien-Produkte bereit, die Saccharose-frei oder Glucose-frei oder Fructose-frei oder frei von Gemischen zweier oder aller der genannten drei Zucker, zum Beispiel Invertzucker-frei, ist.

Im Zusammenhang mit der vorliegenden Erfindung werden unter dem Begriff "süßendes Agens" Substanzen verstanden, die Süßkraft aufweisen und zum Beispiel Lebensmitteln oder Getränken zugesetzt werden, um einen Süßegeschmack hervorzurufen. Im Zusammenhang mit der vorliegenden Erfindung werden die "süßenden Agenzien" unterteilt in "Zucker" wie Saccharose, Glucose oder Fructose, die Körper und Süßkraft geben sowie "Süßungsmittel", also Stoffe, die keine Zucker sind aber trotzdem Süßkraft aufweisen, welche wiederum untergliedert werden in "Zuckeraustauschstoffe", also süßende Agenzien, die einen Körper und einen physiologischen Brennwert zusätzlich zu einer Süßkraft aufweisen (körpergebende Süßungsmittel), und "Intensivsüßstoffe", also Stoffe, die in der Regel eine sehr hohe Süßkraft, aber keinen Körper und in der Regel keinen oder nur einen geringfügigen physiologischen Brennwert aufweisen.

In einer besonders bevorzugten Ausführungsform ist daher vorgesehen, dass das 1,6-GPS- und 1,1-GPM-haltige Gemisch das einzig zugegebene süßende Agens in dem Cerealien-Produkt ist, dass heißt abgesehen von den 1,6-GPS- und 1,1-GPM-haltigen Gemischen keine Zucker, keine Intensivsüßstoffe und keine Zuckeraustauschstoffe und/oder Zuckeralkohole in das Cerealien-Produkt zugegeben wurden. Es kann aber auch vorgesehen sein, dass das 1,6-GPS- und 1,1-GPM-haltige Gemisch das einzig und alleinig in das Cerealien-Produkt zugegebene vorkommende körpergebende süßende Agens ist, dass heißt abgesehen von den 1,6-GPS- und 1,1-GPM-haltigen Gemischen keine Zucker, keine Zuckeralkohole und keine Zuckeraustauschstoffe zugegeben wurden. In einer weiteren Ausführungsform kann vorgesehen sein, dass das 1,6-GPS- und 1,1-GPM-haltige Gemisch der einzig in das Cerealien-Produkt zugegebene Zuckeralkohol beziehungsweise Zuckeralkoholgemisch ist, dass heißt keine weiteren Zuckeralkohole zugegeben worden sind.

Im Zusammenhang mit der vorliegenden Erfindung werden unter Cerealien (oder Zerealien) Getreideprodukte oder Getreideersatzprodukte, insbesondere Müsli, salzige Snacks, Frühstücksprodukte oder Energieriegel verstanden, welche überwiegend aus Getreidekörnern, Getreideflocken, Getreidegranulaten, Getreideextrudaten, Getreidemehl, Getreidepulver, Getreideagglomeraten oder deren Ersatzprodukten wie Sojazubereitungen, zum Beispiel Sojabohnen, Sojamehl, Sojaagglomerat, Sojagranulat, Sojaextrakten sowie Sojapulver aufgebaut sind und darüber hinaus mindestens ein diese Getreide- und/oder Sojaprodukte zusammenfügendes Bindemittel enthalten. Das eingesetzte Getreide kann Weich- oder Hartweizen, Dinkel, Roggen, Hafer, Mais, Gerste, Reis, Sorghum, Hirse, Triticale, Buchweizen, Amarant, Quinoa oder ähnliches wie Soja sein. In einer bevorzugten Ausführungsform der vorliegenden Erfindung wird als Bindemittel für die Cerealien ein 1,6-GPS- und 1,1-GPM-haltiges Gemisch eingesetzt.

Das Cerealien-Produkt der vorliegenden Erfindung weist 5 bis 50 Gew.-% (bezogen auf Gesamttrockensubstanz des Cerealien-Produktes), insbesondere 10 bis 35 Gew.-% (bezogen auf Gesamttrockensubstanz des Cerealien-Produktes), vorzugsweise 20 bis 30 Gew.-% (bezogen auf Gesamttrockensubstanz des Cerealien-Produktes) eines 1,6-GPS- und 1,1-GPM-haltigen Gemisches auf, wobei das 1,6-GPS- und 1,1-GPM-haltige Gemisch in einer ersten bevorzugten Ausführungsform allein im Kern, in einer zweiten bevorzugten Ausführungsform allein in der Beschichtung und in einer dritten bevorzugten Ausführungsform im Kern und in der Beschichtung vorhanden ist.

In einer besonders bevorzugten Ausführungsform weist daher das Cerealien-Produkt der vorliegenden Erfindung das 1,6-GPS- und 1,1-GPM-haltige Gemisch entweder allein in der Beschichtung oder in der Beschichtung und im Kern auf.

Im Kern fungiert das 1,6-GPS- und 1,1-GPM-haltige Gemisch als Bindemittel und als körpergebendes süßendes Agens, in der Beschichtung als Beschichtungsmittel und als körpergebendes süßendes Agens.

In einer weiteren bevorzugten Ausführungsform ist vorgesehen, dass die Beschichtung des Cerealien-Produktes aus dem 1,6-GPS- und 1,1-GPM-haltigen Gemisch besteht, im wesentlichen besteht oder in wesentlichen Anteilen enthält. Es kann dabei erfindungsgemäß in besonders bevorzugter Ausführungsform vorgesehen sein, dass die Beschichtung des Cerealien-Produktes 10 bis 100 Gew.-%, vorzugsweise 20 bis 90 Gew.-%, vorzugsweise 30 bis 80 Gew.-% des 1,6-GPS- und 1,1-GPM-haltigen Gemisches (jeweils bezogen auf die Gesamttrockensubstanz der Beschichtung) aufweist. In einer Ausführungsform der vorliegenden Erfindung können mehrere oder viele Schichten vorgesehen sein, wobei diese hinsichtlich ihrer Zusammensetzung oder Art der Aufbringung gleich sein oder voneinander abweichen können. Der Trockensubstanzanteil der Beschichtung am Gesamt-Cerealien-Produkt kann In bevorzugter Ausführungsform 0 bis 50 Gew.-%, vorzugsweise 2 bis 40 Gew.-%, vorzugsweise 5 bis 30 Gew.-%, insbesondere 10 bis 25 Gew.-%, jeweils bezogen auf das Trockengewicht des Cerealien-Produkts betragen.

In einer besonders bevorzugten Ausführungsform ist vorgesehen, dass die erfindungsgemäßen Cerealien-Produkte im Kern oder/und in der Beschichtung mindestens einen Zusatzstoff enthalten.

Im Zusammenhang mit der vorliegenden Erfindung werden unter Zusatzstoffen solche Stoffe verstanden, die dem erfindungsgemäßen Cerealien-Produkt zusätzlich zu dem 1,6-GPS- und 1,1-GPM-haltigen Gemisch und den Cerealien hinzugegeben werden können. Demgemäß sind die Zusatzstoffe optional einzusetzende Stoffe und die Erfindung erfasst sowohl erfindungsgemäße Cerealien-Produkte, die diese Stoffe oder eine Auswahl davon aufweisen ebenso wie Cerealien-Produkte, die keine oder nicht alle der genannten Zusatzstoffe aufweisen. Die Verwendung der Zusatzstoffe kann je nach Anwendungsgebiet und Anforderungsprofil der Märkte und der Konsumenten individuell zusammengestellt werden.

Im Zusammenhang mit der vorliegenden Erfindung wird unter einem Zusatzstoff zum Beispiel ein Präbiotikum, welches in vorteilhafter Weise die ernährungsphysiologischen Eigenschaften des Cerealien-Produkts positiv beeinflusst, ein Intensivsüßstoff, ein Zucker oder ein Zuckeraustauschstoff, welche die Süßkraft des Cerealien-Produkts beeinflussen, eine fetthaltige Komponente oder ein Molkerei- oder Milcherzeugnis, welche insbesondere die Art und den Geschmack des erzielten Produktes beeinflussen, oder ein Ergänzungsstoff verstanden.

Unter einem Ergänzungsstoff werden solche Stoffe verstanden, die insbesondere das Aussehen, den Geschmack, die Organoleptik, den Nährwert, ernährungsphysiologische Eigenschaften, die Verarbeitbarkeit, Lagerfähigkeit oder Gebrauchsfertigkeit des Cerealien-Produkts betreffen.

In einer weiteren bevorzugten Ausführungsform ist also vorgesehen, dass der mindestens eine Zusatzstoff als Präbiotikum, vorzugsweise Inulin, Oligofructose, resistente Stärke, β-Glucane oder Galactooligosaccharid ausgeführt ist.

Im Zusammenhang mit der vorliegenden Erfindung wird unter einem Präbiotikum ein Zusatzstoff verstanden, der selektiv das Wachstum und/oder die Aktivität spezifischer Bakterien im menschlichen oder tierischen Verdauungstrakt, insbesondere Bifidobakterien und/oder Lactobacillen so stimuliert, dass gesundheitsfördernde Effekte zu erwarten sind oder auftreten.

Im Zusammenhang mit der vorliegenden Erfindung wird unter einem "Probiotikum" eine lebende mikrobielle Zusatzkomponente verstanden, die durch Stabilisierung oder Verbesserung der mikrobiellen Zusammensetzung im Verdauungstrakt des menschlichen oder tierischen Konsumenten dessen Gesundheit fördert. Derartige probiotische Mikroorganismen, die zum Beispiel in Lebensmitteln eingesetzt werden können, sind zum Beispiel: Bifidobacterium wie Stämme *B. adolescentis, B. animalis, B. bifidum, B. longum, B. thermophilum; Enterococccus; Lactobacillus* wie die Stämme *Lb. acidophilus, Lb. brevis, Lb, casei, Lb. cellobiosus, Lb. crispatus, Lb. delbrueckii subsp. Bulgaricus, Lb. fermentum, Lb. GG, Lb. johnsonii, Lb. lactis, Lb. plantarum, Lb. reuteri, Lb. rhamnosus, Lb. salivarius; Bacillus cereus toyoi; Bacillus cereus; Leuconostoc; Pediococcus acidilactici; Propionibacterium; Streptococcus* wie die Stämme *S. cremoris, S. infantarius, S. intermedius, S. lactis, S. salivarius subsp. thermophilus* (vergleiche Fuller, J. Appl. Bacteriol. (1989)). Bevorzugte Probiotika sind Bakterien der Gattungen *Lactobacillus* und *Bifidobacterium*.

Im Zusammenhang mit der vorliegenden Erfindung wird unter "Synbiotikum" ein Gemisch aus mindestens einem Präbiotikum und mindestens einem Probiotikum verstanden, das durch Verbesserung der Überlebensrate und Erhöhung der Anzahl gesundheitsfördernder lebender mikrobieller Organismen im Gastrointestinal-Trakt die Gesundheit des menschlichen oder tierischen Konsumenten fördert, insbesondere durch selektive Stimulierung des Wachstums und/oder der Stoffwechsel-Aktivität der mikrobiellen Organismen.

In einer weiteren bevorzugten Ausführungsform ist vorgesehen, dass der mindestens eine Zusatzstoff als Probiotikum, vorzugsweise Bifidobakterien oder Lactobakterien ausgeführt ist. Derartige probiotische Bakterienkulturen können bevorzugt als Trockenkulturen oder Dauerkulturen ausgeführt sein. In einer weiteren bevorzugten Ausführungsform ist vorgesehen, Synbiotika, das heißt Mischungen von Probiotika und Präbiotika, einzusetzen.

Die Erfindung sieht auch vor, dass der mindestens eine Zusatzstoff als fetthaltige Komponente, zum Beispiel Kakaomasse, gehärtetes oder ungehärtetes Pflanzenfett oder ähnliches, zum Beispiel auch Fettersatzstoff, ausgeführt ist.

Die Erfindung sieht in einer weiteren bevorzugten Ausführungsform vor, dass der mindestens eine Zusatzstoff als Molkerei- oder Milcherzeugnis, insbesondere lactosefreies Milcherzeugnis, zum Beispiel Magermilchpulver, Vollmilchpulver, lactosefreies Mager- oder Vollmilchpulver, Molkenextrakt, Molkenerzeugnis ausgeführt ist. In dieser Ausführungsform ist bevorzugt vorgesehen, das Milcherzeugnis in einer Menge von 2 bis 40 Gew.-%, bevorzugt 5 bis 20 Gew.% (bezogen auf das Gesamtgewicht des Cerealien-Produkts) einzusetzen. Insbesondere in dieser letztgenannten Ausführungsform ist bevorzugt vorgesehen, das Zuckeralkoholgemisch in einer Menge von 20 bis 50 Gew.-% (bezogen auf das Gesamtgewicht des Cerealien-Produkts) einzusetzen.

In einer weiteren Ausführungsform ist vorgesehen, dass der mindestens eine Zusatzstoff ein Zucker, zum Beispiel Saccharose, Isornaltulose, Glucose, Fructose, Maltose, Lactose, Reisstärke, Maisstärke, Kartoffelstärke, oder eine Mischung zweier oder mehrerer davon ist.

Die Erfindung betrifft in einer Ausführungsform auch erfindungsgemäße Cerealien-Produkte, die neben ihrem Gehalt an mindestens 5 Gew.-% des 1,6-GPS- und 1,1-GPM-haltigen Gemisches Süßungsmittel enthalten, zum Beispiel Zuckeraustauschstoffe oder Intensivsüßstoffe.

In einer Ausführungsform der Erfindung ist vorgesehen, dass der Zuckeraustauschstoff insbesondere ein Zuckeralkohol ist und insbesondere ausgewählt ist aus der Gruppe bestehend 1,1-GPS (1-O-α-D-Glucopyranosyl-D-sorbit), Maltodextrine, Lactit, Maltit, Erythrit, Xylit, Mannit, Sorbit, Maltitsirup, hydrierte und nichthydrierte Stärkehydrolysate und einer Mischung zweier oder mehrerer davon.

In einer weiteren bevorzugten Ausführungsform ist daher vorgesehen, dass die Beschichtung des Cerealien-Produktes neben dem 1,6-GPS- und 1,1-GPM-haltigen Gemisch also ein oder mehrere Polyole aufweist, zum Beispiel Sorbit, Maltit, Erythrit, Xylit, Lactit, Mannit oder 1,1-GPS oder ein Gemisch davon.

In einer weiteren bevorzugten Ausführungsform kann daher vorgesehen sein, dass, sofern das 1,6-GPS- und 1,1-GPM-haltige Gemisch im Kern als Bindemittel enthalten ist, diese dort gegebenenfalls zusammen mit einem oder mehreren Polyolen eingesetzt wird, zum Beispiel Sorbit, Maltit, Mannit, 1,1-GPS, Erythrit, Xylit oder Lactit oder ein Gemisch davon.

In einer weiteren bevorzugten Ausführungsform ist vorgesehen, dass der Intensivsüßstoff ausgewählt ist aus der Gruppe bestehend aus Sucralose, Natriumcyclamat, Acesulfam K, Neohesperidin-Dihydrochalkon, Glycyrrhizin, Steveosid, Monellin, Thaumatin, Aspartam, Dulcin, Saccharin, Naringin-Dihydrochalkon, Neotame und einer Mischung zweier oder mehrerer davon.

Die Erfindung sieht in einer besonders bevorzugten Ausführungsform vor, dass der mindestens eine Zusatzstoff als Ergänzungsstoff ausgeführt ist und aus der Gruppe bestehend aus Aromastoffen, wie Vanillin, Farbstoffen, Geschmacksstoffen, Mineralstoffen wie Natrium oder Calzium, insbesondere Salzen wie Natriumchlorid, Vitaminen, Folsäure, Emulgatoren, Lecithin, Ballaststoffen, L-Carnitin, Omega-3-Fettsäuren, Triglyzerin mittlerer Kettenlängen, Phythoöstrogene und Ascorbinsäuresalze oder Kombinationen davon ausgewählt ist.

Erfindungsgemäß ist ebenfalls vorgesehen, dass das Cerealien-Produkt darüber hinaus natürliche und/oder synthetische Farbstoffe enthalten kann. Bei den natürlichen Farbstoffen kann es sich beispielsweise um Farbstoffe pflanzlicher Herkunft, wie Carotinoide, Flavonoide und Anthocyane, Farbstoffe tierischer Herkunft wie Cochenille, anorganische Pigmente wie Titandioxid, EisenoxidPigmente und Eisenhydroxid-Pigmente handeln. Als natürliche Farbstoffe können ebenfalls sekundär gebildete Farbstoffe wie die Produkte der enzymatischen Bräunung, beispielsweise Polyphenole und Produkte der nicht-enzymatischen Bräunung wie Melanoidine eingesetzt werden. Erfindungsgemäß ist ferner vorgesehen, dass als natüniche Farbstoffe Erhitzungsprodukte, zum Beispiel Karamelle und Zuckercouleur eingesetzt werden können. Für die erfindungsgemäßen Cerealien-Produkte können darüber hinaus synthetische Farbstoffe wie Azo-, Triphenylmethan-, Indigoid-, Xanthen- und Chinolin-Verbindungen eingesetzt werden.

Erfindungsgemäß können die erfindungsgemäßen Cerealien-Produkte zusätzlich mit natürlichen oder synthetischen Vitaminen ausgewählt aus der Gruppe bestehend aus Vitamin A, Vitamin B₁, Vitamin B₂, Vitamin B₃, Vitamin B₅, Vitamin B₆, Vitamin B₁₂, Vitamin B-Komplex, Vitamin C, Vitamin D, Vitamin E, Vitamin F und Vitamin K angereichert sein. Die erfindungsgemäßen Cerealien-Produkte können darüber hinaus zusätzliche Mineralstoffe und Spurenelemente enthalten.

Die Cerealienprodukte weisen bevorzugt also mindestens einen Zusatzstoff auf, der ausgewählt ist aus der Gruppe bestehend aus Süßungsmitteln, Reisstärke, Kartoffelstärke, Maisstärke, resistente Stärke, β-Glucan, Intensivsüßstoffen, Aromastoffen, Gewürzen, Molkereiprodukten, Präbiotika, Synbiotika, Probiotika, kakaohaltige Produkte, Schokolade, Fetten, Ergänzungsstoffen, Emulgatoren, Genusssäuren, löslichen und unlöslichen Ballaststoffen wie Inulin und Oligofructose, Konsistenzgebern, Vitamine, Mineralstoffe, Bindemitteln, Farbstoffen und Konservierungsstoffen.

Die Erfindung sieht in einer besonders bevorzugten Ausführungsform vor, dass das erfindungsgemäße Cerealien-Produkt der vorliegenden Erfindung nicht nur einen, sondern mehrere Zusatzstoffe, zum Beispiel zwei, drei, vier, fünf, sechs oder mehr Zusatzstoffe aufweisen kann.

In einer besonders bevorzugten Ausführungsform der vorliegenden Erfindung liegen die Cerealien in unbehandelter, extrudierter, gekochter oder gepuffter Form vor.

Die erfindungsgemäßen Cerealien können Müsliriegel, Energieriegel und Frühstücksprodukt, insbesondere Cluster, Müsli, salzige Snacks, Cornflakes (geröstete Maisflocken), Puffmais, Puffreis, Ringe (Loops), Kugeln, Kissen, Flocken oder Knusperflocken (Crispies) sein.

In einer weiteren bevorzugten Ausführungsform der vorliegenden Erfindung betrifft diese ein Verfahren zur Herstellung eines Cerealien-Produktes, insbesondere der vorgenannten Art, enthaltend die Schritte
a) Bereitstellen der Cerealien und des mindestens einen Bindemittels sowie gegebenenfalls mindestens eines Zusatzstoffes,
b) in Verbindung bringen der Cerealien mit dem Bindemittel und gegebenenfalls dem mindestens einen Zusatzstoff und
c) Verfestigen des Bindemittels und gegebenenfalls des mindestens einen Zusatzstoffes mit den Cerealien zu einem Agglomerat aus Cerealien und Bindemittel und dem gegebenenfalls vorhandenen Zusatzstoff,
wobei das Bindemittel aus einem 1,6-GPS- und 1,1-GPM-haltigen Gemisch besteht, im wesentlichen besteht oder dieses in wesentlichen Anteilen enthält, insbesondere 30 bis 100 Gew.-%, 40 bis 90 Gew.-%, vorzugsweise 50 bis 80 Gew.-% des 1,6-GPS- und 1,1-GPM-haltigen Gemisches (bezogen auf Gesamttrockensubstanz des Bindemittels) enthält. Die Erfindung sieht dabei in bevorzugter Ausführungsform vor, dass das Bindemittel in Schritt a) in Form einer wässrigen Bindemittellösung oder eines Bindemittelsirups vorliegt, zum Beispiel mit einem Trockensubstanzgehalt von 60 - 90%, vorzugsweise 70 - 80%. Gegebenenfalls kann neben dem 1,6-GPS-und 1,1-GPM-haltigen Gemisch mindestens ein weiteres bindendes Agens in dem Bindemittel vorhanden sein, zum Beispiel Polydextrose. In bevorzugter Ausführungsform kann das Inverbindungbringen in Schritt b) durch Extrudieren geschehen.

In einer weiteren bevorzugten Ausführungsform ist vorgesehen, das die in Schritt b) vorgesehene Kontaktierung der Cerealie mit dem Bindemittel, insbesondere in Form einer wässrigen Lösung des Bindemittels bei erhöhter Temperatur, zum Beispiel 70 bis 110, vorzugsweise 80 bis 100°C stattfindet. In einer weiteren bevorzugten Ausführungsform ist vorgesehen, dass im Anschluss an Schritt c) eine Trocknung des erhaltenen Agglomerats durchzuführen ist, zum Beispiel bei 120 bis 140°C.

In einer weiteren bevorzugten Ausführungsform ist vorgesehen, dass das so hergestellte Cerealien-Produkt ausgewählt ist aus der Gruppe Müsliriegel, Energieriegel, salzige Snacks und Frühstücksprodukte, insbesondere Flocken, Ringe (Loops), Cornflakes (geröstete Maisflocken), Puffmais, Puffreis, Kissen, Kugeln, Müsli, Knusperflocken (Crispies) und Cluster.

Bevorzugt enthält das Bindemittel mindestens einen Zusatzstoff, der ausgewählt ist aus der Gruppe bestehend aus Süßungsmitteln, Intensivsüßstoffen, Aromastoffen, Gewürzen, Molkereiprodukten, Präbiotika, Synbiotika, Probiotika, kakaohaltigen Produkten, Schokolade, Omega-3-Fettsäure, L-Carnitin, Fetten, resistenter Stärke, β-Glucan, Maisstärke, Kartoffelstärke, Reisstärke, Ergänzungsstoffen, Emulgatoren, Genusssäuren, löslichen und unlöslichen Ballaststoffen wie Inulin und Oligofructose, Konsistenzgebern, Vitaminen, Mineralstoffen, Bindemitteln, Farbstoffen und Konservierungsstoffen.

Die Erfindung betrifft ein Verfahren zur Herstellung eines gefrosteten oder glasierten Cerealien-Produktes bereitzustellen, insbesondere der vorgenannten Art, wobei dieses einen Kern aus Cerealien und eine Beschichtung aufweist, wobei in einem Verfahrensschritt
i) der Kern mit einer Beschichtungslösung oder einem Beschichtungssirup oder einer Beschichtungsschmelze beschichtet wird, gegebenenfalls unter Bewegung der Kerne,
ii) der erhaltene Überzug getrocknet und
iii) ein beschichtetes Cerealien-Produkt
erhalten wird, wobei die Beschichtungslösung oder der Beschichtungssirup aus in wässrigen Medien vorliegendem 1,6-GPS- und 1,1-GPM-haltigen Gemisch beziehungsweise die Schmelze aus geschmolzenem 1,6-GPS- und 1,1-GPM-haltigem Gemisch besteht, im wesentlichen besteht oder diesen in wesentlichen Anteilen enthält, und zwar von 20 bis 100 Gew.-%, vorzugsweise 20 bis 90 Gew.-%, insbesondere 40 bis 90 Gew.-%, vorzugsweise 50 bis 80 Gew.-% des 1,6-GPS- und 1,1-GPM-haltigen Gemisches und besonders bevorzugt 70 bis 90 Gew.-% (jeweils bezogen auf die Gesamttrockensubstanz der Beschichtungslösung oder des Sirups oder der Schmelze) ein 1,6-GPS- und 1,1-GPM-haltiges Gemisch enthält. Die Erfindung sieht vor, dass die Beschichtungslösung beziehungsweise -sirup oder die Beschichtungsschmelze eine Temperatur von 70°C bis 180°C, insbesondere 80°C bis 110°C, aufweist und mit dieser Temperatur zur Beschichtung in Schritt i) eingesetzt wird. In bevorzugter Ausführungsform der vorliegenden Erfindung weist die Beschichtungslösung oder -sirup einen Gesamttrockensubstanzgehalt von bevorzugt 70 bis 90 Gew.-% (bezogen auf das Gewicht der Lösung oder des Sirups).

Bei hochkonzentrierten Lösungen oder Schmelzen, zum Beispiel mit einem Trockensubstanzgehalt von 90 bis 100% TS (bezogen auf das Gesamtgewicht der Lösung oder der Schmelze) eines 1,6-GPS- und 1,1-GPM-haltigen Gemisches kann in einer bevorzugten Ausführungsform der vorliegenden Erfindung eine Temperatur von 150 bis 180°C, insbesondere 155 bis 170°C für die Herstellung der Schmelze oder der Lösung vorgesehen werden, wobei bei der Beschichtung in Schritt i) die Temperatur bei über/gleich 135°C zu halten ist.

Ein in einem erfindungsgemäßen Beschichtungsverfahren eingesetzter Kern kann beispielsweise gemäß der vorstehenden Verfahrensweise der Erfindung hergestellt sein, nämlich unter Verwendung eines Bindemittels enthaltend das 1,6-GPS- und 1,1-GPM-haltige Gemisch. Es kann aber auch vorgesehen sein, einen Cerealienkern einzusetzen, deren Cerealien mit einem Bindemittel einer anderen Art oder Zusammensetzung verbunden sind.

In einer weiteren bevorzugten Ausführungsform kann vorgesehen sein, dass der Cerealienkern für die Beschichtung ausgewählt ist aus extrudierten, gekochten und gepufften Cerealien, insbesondere Ringe (Loops), Knusperflocken (Crispies), Puffreis, Puffmais, salzige Snacks, Cornflakes, Müsli, Kissen, Kugeln und Cluster.

Gemäß der Erfindung wird die Beschichtung in Schritt ii) bei einer Temperatur von 120°C bis 130°C, bevorzugt 125°C bis 130°C, getrocknet und so ein glasiertes Cerealien-Produkt mit einem Cerealienkern und einer glasartigen amorphen Beschichtung ("Glazing") erhalten. Das erfindungsgemäße "Glazing" kann in bevorzugter Ausführungsform auch mit hochkonzentrierter Lösung oder Schmelze der vorgenannten Art durchgeführt werden.

In einer besonders bevorzugten Ausführungsform ist ein vorgenanntes Verfahren zur Herstellung einer glasartigen amorphen Beschichtung vorgesehen, wobei das erhaltene Cerealienprodukt im Anschluss an das Auftragen der amorphen Beschichtung und die Trocknung gekühlt wird, insbesondere unter Bewegung.

In einer besonders bevorzugten Ausführungsform ist für die Herstellung des glasierten Cerealien-Produktes vorgesehen, als 1,6-GPS und 1,1-GPM-haltiges Gemisch Isomalt einzusetzen.

Gemäß der Erfindung wird die Beschichtung in Schritt ii) der vorliegenden Verfahrensabfolge alternativ bei einer Temperatur von unter 85°C, vorzugsweise 50 bis 70°C, besonders bevorzugt 50 bis 60°C getrocknet und so ein gefrostetes Cerealien-Produkt mit einem Cerealienkern und einer kristallinen Beschichtung ("Frosting") erhalten, wobei die beschichteten Produkte während der Trocknung in Schritt ii) bewegt werden. In bevorzugter Ausführungsform der vorliegenden Erfindung wird das erfindungsgemäße "Frosting" mit einer Beschichtungslösung oder -sirup mit einem TS-Gehalt von 70-90 Gew.-% TS (bezogen auf das Gesamtgewicht der Lösung oder des Sirups) durchgeführt.

In einer weiteren bevorzugten Ausführungsform ist vorgesehen, als 1,6-GPS- und 1,1-GPM-haltiges Zuckeralkoholgemisch zur Herstellung eines gefrosteten Cerealien-Produktes der vorgenannten Art ein 1,6-GPM- oder ein 1,6-GPS-angereichertes Gemisch, insbesondere Isomalt GS, einzusetzen.

In einer weiteren bevorzugten Ausführungsform ist vorgesehen, dass die Beschichtungslösung oder der Beschichtungssirup oder die Beschichtungsschmelze mindestens einen Zusatzstoff enthält. In einer bevorzugten Ausführungsform der vorliegenden Erfindung ist dieser Zusatzstoff ausgewählt aus der Gruppe bestehend aus Süßungsmittein, Maisstärke, Kartoffelstärke, Reisstärke, β-Glucan, resistenter Stärke, Intensivsüßstoffen, insbesondere als Acesulfam K, Sucralose, Cyclamat, Stevioside, Neohesperidin-Dihydrochalkon, Aromastoffen, Gewürzen, Molkereiprodukten, Präbiotika, Synbiotika, Probiotika, kakaohaltigen Produkten, Schokolade, L-Carnitin, Omega-3-Fettsäuren, Fetten, Ergänzungsstoffen, Emulgatoren, Genusssäuren, löslichen und unlöslichen Ballaststoffen wie Inulin und Oligofructose, Konsistenzgebem, Vitaminen, Mineralstoffen, Bindemitteln, Farbstoffen und Konservierungsstoffen.

Die Erfindung betrifft auch die mittels der erfindungsgemäßen Verfahren hergestellten beschichteten und unbeschichteten Produkte.

Die Erfindung betrifft auch die Verwendung eines 1,6-GPS- und 1,1-GPM-haltigen Gemisches zur Herstellung eines Cerealien-Produktes der vorgenannten Art, insbesondere als Bindemittel und/oder als Bestandteil einer Beschichtungslösung oder eines Beschichtungssirups oder einer Beschichtungsschmelze.

Weitere vorteilhafte Ausgestaltungen ergeben sich aus den Unteransprüchen.

Die Erfindung wird anhand der nachfolgenden Beispiele näher erläutert.

### Beispiel 1: Herstellung von gefrosteten, beschichteten Cerealienprodukten mit einer Isomalt GS-Lösung

Gekochte, gepuffte oder extrudierte Cerealien, zum Beispiel Ringe, oder Bällchen, Cornflakes oder Puffreis werden in heißer Luft bei 80 bis 95°C erhitzt und in eine Drehtrommel eingebracht.

Es wird eine wässrige Isomalt GS-Lösung aus 75% Isomalt GS (75 bis 80 Gew.-% 1,6-GPS, 20 bis 25 Gew.-% 1,1-GPM) und 25% Wasser, gegebenenfalls unter Zusatz von 0,05% Acesulfam K oder 0,02% Sucralose, (jeweils Gewichtsprozent, bezogen auf Gesamtlösung) hergestellt. Dies geschieht, indem Isomalt GS, gegebenenfalls die Intensivsüßstoffe, und Wasser vermischt und auf 100°C erhitzt wird, wobei alle Kristalle aufgelöst werden. Es wird ein Trockensubstanzgehalt von 76 bis 79% TS Isomalt GS eingestellt. Die so erhaltene Lösung wird auf eine Temperatur von 80 bis 100 °C eingestellt und im folgenden Beschichtungsverfahren auch bei dieser Temperatur gehalten. Um die Beschichtungslösung auf die Cerealien aufzubringen, werden in die Drehtrommel langsam 500 g der hergestellten Isomalt GS-Lösung zu 1000 g der Cerealien gegeben. Es wird 0,5 bis 1 Minute beschichtet. Das Produkt wird mit trockener und warmer Luft mit einer Temperatur von 60 bis 80°C unter Bewegung in der Drehtrommel getrocknet. Nach etwa 10 Minuten Trocknungszeit ist die kristalline Beschichtung im wesentlichen trocken und erschient vollständig weiß und kristallisiert. Das erhaltene Produkt wird anschließend vor dem Verpacken auf Raumtemperatur abgekühlt.

### Beispiel 2: Herstellung eines Cerealienproduktes mit einer glasartigen Beschichtung mit einer Isomalt ST-Lösung

Gekochte, gepuffte oder extrudierte Cerealien, zum Beispiel Ringe, Bällchen, Cornflakes oder Puffreis werden in heißer Luft bei 80 - 95°C erhitzt und in eine Drehtrommel eingebracht.

Es wird eine wässrige Lösung aus 70% Isomalt ST (50% 1,1-GPM und 50% 1,6-GPS), 5% Kakaopulver und 25% Wasser, gegebenenfalls unter Zusatz von 0,05% Acesulfam K oder 0,02% Sucralose, (jeweils Gewichtsprozent, bezogen auf Gesamtlösung) hergestellt. Dies geschieht, indem Isomalt ST, gegebenenfalls die Intensivsüßstoffe, und Wasser vermischt und auf 105°C erhitzt wird, wobei alle Kristalle aufgelöst werden. Es wird ein Gesamttrockensubstanzgehalt von 80 - 82% TS (75 - 77% TS Isomalt ST) eingestellt. Die so erhaltene Lösung wird auf eine Temperatur von 80 bis 100 °C eingestellt und im folgenden Beschichtungsverfahren auch bei dieser Temperatur gehalten. Um die Beschichtungslösung auf die Cerealien aufzubringen, werden in die Drehtrommel langsam 500g der hergestellten Isomalt ST-Lösung zu 1000g der Cerealien gegeben. Es wird 0,5 bis 1 Minute beschichtet. Das Produkt wird in einer Trocknungsvorrichtung bei einer Temperatur von etwa 130°C getrocknet. Nach etwa 10 bis 15 Minuten ist die glasartige Beschichtung bereits im wesentlichen trocken, erscheint aber noch klebrig. Das erhaltene Produkt wird daher unter Bewegung mit Luft von Raumtemperatur für 10 bis 20 Minuten abgekühlt, bevor es verpackt wird. Man erhält ein nicht klebriges Produkt.

### Beispiel 3: Herstellung eines Cerealienproduktes mit glasartiger Beschichtung mittels hoch-konzentrierter Isomalt ST-Lösung oder - Schmelze

Gekochte, gepuffte oder extrudierte Cerealien, zum Beispiel Ringe, Bällchen, Cornflakes oder Puffreis werden in heißer Luft bei 80 - 95°C erhitzt und in eine Drehtrommel eingebracht.

Es wird eine wässrige Isomalt ST-Lösung aus 75% Isomalt ST und 25% Wasser, gegebenenfalls unter Zusatz von 0,05% Acesulfam K oder 0,02% Sucralose, (jeweils Gewichtsprozent, bezogen auf Gesamtlösung) hergestellt. Dies geschieht, indem Isomalt ST, gegebenenfalls die Intensivsüßstoffe, und Wasser vermischt und auf 155 bis 170°C erhitzt wird, wobei ein Sirup oder Schmelze erhalten wird. Es wird ein Trockensubstanzgehalt von etwa 98% TS Isomalt ST eingestellt. Alternativ kann mit Isomalt ST in einer geeigneten Schmelzvorrichtung bei einer Temperatur über dem Schmelzpunkt von Isomalt ST auch eine Schmelze hergestellt werden. Die so erhaltene Lösung beziehungsweise Schmelze wird auf eine Temperatur von 135°C eingestellt und im folgenden Beschichtungsverfahren auch bei dieser Temperatur gehalten. Um die Beschichtungslösung auf die Cerealien aufzubringen, werden in die auf etwa 130°C erhitzte Drehtrommel langsam 500g der hergestellten Isomalt ST-Lösung zu 1000g der Cerealien gegeben. Es wird 0,5 bis 1 Minute beschichtet. Im Anschluss an die Beschichtung wird das Produkt aus der Drehtrommel entfernt und in einer Trocknungsvorrichtung unter Bewegung mit Luft von Raumtemperatur für 10 bis 20 Minuten abgekühlt, bevor es verpackt wird. Man erhält ein nicht klebriges Produkt.

### Beispiel 4: Herstellung eines Cereallenproduktes unter Verwendung von Isomalt ST als Bindemittel

### Rezeptur des Bindemittels:

| Bestandteile | % (Gewichtsprozent) |
|---|---|
| Isomalt ST | 60,00 |
| Inulin oder Oligofructose | 20,00 |
| Wasser | 20,00 |
| Gesamt | 100,00 |

Das Bindemittel kann optional Saccharose, bis zu 10% Fett und/oder bis zu 0,4% Lecithin enthalten.

### Rezeptur der Cerealien (Cerealiengemisch):

| Bestandteile | % (Gewichtsprozent) |
|---|---|
| Nutrigrain | 33,00 |
| Weizenkleie Mini Crispies | 22,00 |
| Kokosnussflocken | 11,00 |
| Haselnussstücke | 34,00 |
| Gesamt | 100,00 |

### Herstellung:

In einem ersten Verfahrensschritt wird Isomalt ST mit Inulin oder Oligofructose vermischt und diese Mischung mit Wasser aufgekocht, wobei ein Trockensubstanzgehalt von 80 bis 82% eingestellt wird. Das so hergestellte Bindemittel wird mit dem Cerealiengemisch In einem Verhältnis von 20% Bindemittel und 80% Cerealiengemisch (jeweils Gew.-%) vermischt und ausgerollt. Es wird anschließend in einem Trockner bei 130°C getrocknet und in Barren geschnitten oder in Cluster zerbrochen sowie anschließend vor dem Verpacken gekühlt.

## Patentansprüche

1. Verfahren zur Herstellung eines glasierten Cerealien-Produkts mit einem Kern aus Cerealien und einer Beschichtung, wobei
a) der Kern mit einer Beschichtungslösung, enthaltend 20 bis 100 Gew.-% 1,6-GPS (6-0-α-D-Glucopyranosyl-D-sorbit)- und 1,1-GPM (1-O-α-D-Glucopyranosyl-D-mannit)-haltiges Gemisch (jeweils bezogen auf die Gesamttrockensubstanz der Beschichtungslösung) und eine Temperatur von 70°C bis 180°C aufweisend, beschichtet,
b) die erhaltene Beschichtung bei einer Temperatur von 120 °C bis 130 °C getrocknet,
c) anschließend unter Bewegung gekühlt und
d) ein beschichtetes glasiertes Cerealien-Produkt mit einem Cerealien-Kern und einer glasartigen, amorphen Beschichtung erhalten wird.

2. Verfahren zur Herstellung eines gefrosteten Cerealien-Produkts mit einem Kern aus Cerealien und einer Beschichtung, wobei
a) der Kern mit einer Beschichtungslösung, -sirup oder -schmelze, enthaltend 20 bis 100 Gew.-% 1,6-GPS (6-0-α-D-Glucopyranosyl-D-sorbit)- und 1,1-GPM (1-O-α-D-Glucopyranosyl-D-mannit)-haltiges Gemisch (jeweils bezogen auf die Gesamttrockensubstanz der Beschichtungslösung, -sirup oder -schmelze) und eine Temperatur von 70 °C bis 180 °C aufweisend, beschichtet
b) die erhaltene Beschichtung unter Bewegung bei einer Temperatur von unter 85°C getrocknet und
c) ein beschichtetes gefrostetes Cerealien-Produkt mit einem Cerealien-Kern und einer kristallinen Beschichtung erhalten wird.

3. Verfahren nach einem der vorstehenden Ansprüche, wobei das Bindemittel und/oder die Beschichtungslösung, -sirup oder -schmelze mit mindestens einem Zusatzstoff versehen ist, ausgewählt aus: Süßungsmitteln, Intensivsüßstoffen, Aromastoffen, Gewürzen, Molkereiprodukten, Präbiotika, Synbiotika, Probiotika, kakaohaltigen Produkte, Schokolade, Omega-3-Fettsäure, L-Carnitin, Fetten, resistener Stärke, β-Glucan, Maisstärke, Kartoffelstärke, Reisstärke, Ergänzungsstoffen, Emulgatoren, Genusssäuren, löslichen und unlöslichen Ballaststoffen wie Inulin und Oligofructose, Konsistenzgebern, Vitaminen, Mineralstoffen, Bindemitteln, Farbstoffen und Konservierungsstoffen.

4. Verfahren nach einem der vorstehenden Ansprüche, wobei der Cerealien-Kern ausgewählt ist aus: extrudierten, gekochten und gepufften Cerealien, insbesondere Flocken, salzigen Snacks, Ringen, Knusperflocken, Puffreis, Puffmais, Kissen, Kugeln, Cornflakes, Clustern und Müsli.

5. Verfahren nach einem der vorstehenden Ansprüche, wobei das 1,6-GPS- und 1,1-GPM-haltige Gemisch Isomalt, ein 1,6-GPS-angereichertes Gemisch oder ein 1,1-GPM-angereichertes Gemisch ist.

6. Verfahren nach Anspruch 5, wobei das Gemisch ein Gemisch aus 75 bis 80 Gew.-% 1,6-GPS und 25 bis 20 Gew.-% 1,1-GPM ist.

7. Verfahren nach einem der vorstehenden Ansprüche, wobei das 1,6-GPS- und 1,1-GPM-haltige Gemisch zusätzlich 1,1-GPS (1-O-α-D-Glucopyranosyl-D-sorbit) enthält.

8. Cerealien-Produkt, herstellbar durch das Verfahren nach einem der Ansprüche 1 bis 7, umfassend durch mindestens ein Bindemittel verbundene Cerealien und/oder mindestens eine Beschichtung aufweisende Cerealien, wobei das Cerealien-Produkt 50 bis 95 Gew.-% (bezogen auf Gesamttrockensubstanz des Cerealien-Produktes) Cerealien und 5 bis 50 Gew.-% (bezogen auf Gesamttrockensubstanz des Cerealien-Produktes) eines 1,6-GPS- und 1,1-GPM-haltigen Zuckeralkoholgemisches als Bindemittel und/oder Beschichtung enthält.

9. Cerealien-Produkt, umfassend durch mindestens ein Bindemittel verbundene Cerealien und/oder mindestens eine Beschichtung aufweisende Cerealien, wobei das Cerealien-Produkt 50 bis 95 Gew.-% (bezogen auf Gesamttrockensubstanz des Cerealien-Produktes) Cerealien und 5 bis 50 Gew.-% (bezogen auf Gesamttrockensubstanz des Cerealien-Produktes) eines 1,6-GPS (6-O-α-D-Glucopyranosyl-D-sorbit)- und 1,1-GPM (1-O-α-D-Glucopyranosyl-D-mannit)-haltigen Zuckeralkoholgemisches als Bindemittel und/oder Beschichtung enthält,
wobei das Cerealien-Produkt einen Kern aus Cerealien, optional mit mindestens einem Bindemittel, und mindestens eine auf dem Kern aufgebrachte Beschichtung aufweist und
wobei das 1,6-GPS- und 1,1-GPM-haltige Gemisch allein im Kern vorhanden ist.

## Claims

1. A method for producing a glazed cereal product comprising a core made of cereals and a coating, wherein
a) the core is coated with a coating solution containing 20 to 100% by weight of a mixture comprising 1,6-GPS (6-O-α-D-glucopyranosyl-D-sorbitol) and 1,1-GPM (1-O-α-D-glucopyranosyl-D-mannitol) (each in relation to the total dry substance of the coating solution) and having a temperature of 70°C to 180°C,
b) the resulting coating is dried at a temperature of 120°C to 130°C,
c) cooling is subsequently performed while moving, and
d) a coated glazed cereal product comprising a cereal core and a glassy, amorphous coating is obtained.

2. A method for producing a frosted cereal product comprising a core made of cereals and a coating, wherein
a) the core is coated with a coating solution comprising 20 to 100% by weight of a mixture comprising 1,6-GPS (6-O-α-D-glucopyranosyl-D-sorbitol) and 1,1-GPM (1-O-α-D-glucopyranosyl-D-mannitol) (each in relation to the total dry substance of the coating solution, syrup or melt) and having a temperature of 70°C to 180°C,
b) the resulting coating is dried at a temperature of less than 85°C while being moved, and
c) a coated frosted cereal product comprising a cereal core and a crystalline coating is obtained.

3. A method according to any one of the preceding claims, wherein the binding agent and/or the coating solution, syrup or melt comprises at least one additive selected from the following group: sweetening agents, high-intensity sweeteners, flavoring agents, spices, dairy products, prebiotics, synbiotics, probiotics, cocoa-containing products, chocolate, omega-3 fatty acid, L-carnitine, fats, resistant starch, (β-glucan, corn starch, potato starch, rice starch, supplements, emulsifiers, food-grade acids, soluble and insoluble fibers such as inulin and oligofructose, stabilizers, vitamins, mineral nutrients, binding agents, dyes and preservatives.

4. A method according to any one of the preceding claims, wherein the cereal core is selected from the following group: extruded, cooked and puffed cereals, particularly flakes, salty snacks, loops, crispies, puffed rice, puffed corn, bite-sized pieces, balls, cornflakes, clusters and granola.

5. A method according to any one of the preceding claims, wherein the mixture comprising 1,6-GPS and 1,1-GPM is isomalt, a mixture enriched with 1,6-GPS or a mixture enriched with 1,1-GPM.

6. A method according to claim 5, wherein the mixture is a mixture of 75 to 80 % by weight of 1,6-GPS and 25 to 20 % by weight of 1,1-GPM.

7. A method according to any one of the preceding claims, wherein the mixture comprising 1,6-GPS and 1,1-GPM further comprises 1,1-GPS (1-O-α-D-glucopyranosyl-D-sorbitol).

8. A cereal product, producible by a method according to any one of the claims 1 to 7, comprising cereals bonded by at least one binding agent and/or cereals comprising at least one coating, wherein the cereal product comprises 50 to 95% by weight (in relation to the total dry substance of the cereal product) of cereals and 5 to 50% by weight (in relation to the total dry substance of the cereal product) of a sugar alcohol mixture comprising 1,6-GPS and 1,1-GPM as the binding agent and/or coating.

9. A cereal product, comprising cereals bonded by at least one binding agent and/or cereals having at least one coating, wherein the cereal product comprises 50 to 95% by weight (in relation to the total dry substance of the cereal product) of cereals and 5 to 50% by weight (in relation to the total dry substance of the cereal product) of a sugar alcohol mixture comprising 1,6-GPS (6-O-α-D-glucopyranosyl-D-sorbitol) and 1,1-GPM (1-O-α-D-glucopyranosyl-D-mannitol) as the binding agent and/or coating,
wherein the cereal product has a core made of cereals, optionally having at least one binding agent, and at least one coating that is applied to the core, and
wherein the mixture comprising 1,6-GPS and 1,1-GPM is only present in the core.

## Revendications

1. Procédé de fabrication d'un produit céréalier recouvert d'un glaçage avec un coeur en céréales et un enrobage, dans lequel
a) le coeur est enrobé d'une solution d'enrobage contenant 20 à 100 % en poids d'un mélange contenant du 1,6-GPS (6-O-α-D-glucopyranosyl-D-sorbitol) et du 1,1-GPM (1-O-α-D-glucopyranosyl-D-mannitol) (à chaque fois par rapport à la substance sèche totale de la solution d'enrobage) et présentant une température de 70°C à 180°C,
b) l'enrobage obtenu est séché à une température de 120°C à 130°C,
c) est ensuite refroidi en agitant et
d) un produit céréalier enrobé recouvert d'un glaçage est obtenu avec un coeur en céréales et un enrobage amorphe de type glaçage.

2. Procédé de fabrication d'un produit céréalier glacé avec un coeur en céréales et un enrobage, dans lequel
a) le coeur est enrobé d'une solution, d'un sirop ou d'un matière en fusion d'enrobage contenant 20 à 100 % en poids d'un mélange contenant du 1,6-GPS (6-O-α-D-glucopyranosyl-D-sorbitol) et du 1,1-GPM (1-O-α-D-glucopyranosyl-D-mannitol) (à chaque fois par rapport à la substance sèche totale de la solution, du sirop ou du liquide d'enrobage) et présentant une température de 70°C à 180°C,
b) l'enrobage obtenu est séché à une température inférieure à 85°C en agitant et
c) un produit céréalier enrobé glacé est obtenu avec un coeur en céréales et un enrobage cristallin.

3. Procédé selon l'une quelconque des revendications précédentes, dans lequel le liant et/ou la solution, le sirop ou le liquide d'enrobage est pourvu d'au moins un additif sélectionné parmi : des édulcorants, des saccharines intensives, des aromatisants, des épices, des produits laitiers, des prébiotiques, des synbiotiques, des probiotiques, des produits cacaotés, des chocolats, des acides gras oméga 3, de la L-carnitine, des graisses, de l'amidon résistant, du β-glucane, de l'amidon de maïs, de l'amidon de pomme de terre, de l'amidon de riz, des compléments, des émulsifiants, des acidifiants de goût, des fibres solubles et insolubles comme l'inuline et l'oligofructose, des épaississants, des vitamines, des minéraux, des liants, des colorants et des conservateurs.

4. Procédé selon l'une quelconque des revendications précédentes, dans lequel le coeur en céréales est sélectionné parmi : des céréales extrudées, cuites et soufflées, notamment des flocons, des snacks salés, des anneaux, des flocons croustillants, du riz soufflé, du maïs soufflé, des carrés, des boules, des corn-flakes, des pépites et du muesli.

5. Procédé selon l'une quelconque des revendications précédentes, dans lequel le mélange contenant du 1,6-GPS et du 1,1-GPM est de l'isomalt, un mélange enrichi en 1,6-GPS ou un mélange enrichi en 1,1-GPM.

6. Procédé selon la revendication 5, dans lequel le mélange est un mélange de 75 à 80 % en poids de 1,6-GPS et de 25 à 20 % en poids de 1,1-GPM.

7. Procédé selon l'une quelconque des revendications précédentes, dans lequel le mélange contenant du 1,6-GPS et du 1,1-GPM contient en outre du 1,1-GPS (1-O-α-D-glucopyranosyl-D-sorbitol).

8. Produit céréalier pouvant être fabriqué par le procédé selon l'une quelconque des revendications 1 à 7, constitué par des céréales reliées à au moins un liant et/ou des céréales présentant au moins un enrobage, dans lequel le produit céréalier contient 50 à 95 % en poids (par rapport à la substance sèche totale du produit céréalier) de céréales et 5 à 50 % en poids (par rapport à la substance sèche totale du produit céréalier) d'un mélange d'alcool de sucre contenant du 1,6-GPS et du 1,1-GPM en tant que liant et/ou enrobage.

9. Produit céréalier constitué par des céréales reliées à au moins un liant et/ou des céréales présentant au moins un enrobage, dans lequel le produit céréalier contient 50 à 95 % en poids (par rapport à la substance sèche totale du produit céréalier) de céréales et 5 à 50 % en poids (par rapport à la substance sèche totale du produit céréalier) d'un mélange d'alcool de sucre contenant du 1,6-GPS (6-O-α-D-glucopyranosyl-D-sorbitol) et du 1,1-GPM (1-O-α-D-glucopyranosyl-D-mannitol) en tant que liant et/ou enrobage,
dans lequel le produit céréalier présente un coeur en céréales, avec en option au moins un liant et au moins un enrobage appliqué sur le coeur et
dans lequel le mélange contenant du 1,6-GPS et du 1,1-GPM est uniquement présent dans le coeur.
